# EUROPÄISCHE PATENTANMELDUNG

(11) **EP 3 563 652 A1**
(43) Veröffentlichungstag der Anmeldung: **06.11.2019**
(21) Anmeldenummer: 19171968.1
(22) Anmeldetag: 30.04.2019
(51) Int. Cl.: A01B 39/08, A01B 39/18, A01B 49/02, A01B 21/04, A01B 45/02, A01B 39/22

(54) **JÄTVORRICHTUNG, INSBESONDERE ZUR FRÜHJÄTUNG**

(30) Priorität: 02.05.2018 DE 102018110532; 16.10.2018 EP 18200598
(71) Anmelder: Entwicklungsbüro für Ökologischen Landbau und Innovation UG (haftungsbeschränkt), 39615 Zehrental (DE)
(72) Erfinder: WÖLLNER, Hartmut, 39615 Zehrental (DE)
(74) Vertreter: Müller & Schubert

(57) **Zusammenfassung**

Die vorliegende Erfindung betrifft ein Zinkenführungsrad zur mechanischen Unkrautbeseitigung sowie eine Hack- oder Jätvorrichtung, umfassend mindestens ein Zinkenführungsrad.

Beschrieben wird ein Zinkenführungsrad (18) zur Unkrautbeseitigung, umfassend ein Rad (2) und mindestens eine Vielzahl von Zinken (7), wobei die einzelnen Zinken (7) der Vielzahl von Zinken (7) entlang einer Umfangslinie auf dem Radkranz (16) des Rades (2) gleichmäßig zueinander beabstandet und radial nach außen weisend angeordnet sind.

Weiterhin beschrieben wird eine Hack- oder Jätvorrichtung zur mechanischen Unkrautbeseitigung, umfassend mindestens ein erfindungsgemäßes Zinkenführungsrad (18).

## Beschreibung

Die vorliegende Erfindung betrifft ein Zinkenführungsrad zur mechanischen Unkrautbeseitigung sowie eine Hack- oder Jätvorrichtung umfassend mindestens ein erfindungsgemäßes Zinkenführungsrad.

Mit der Ausdehnung der Ökologischen Landwirtschaft und zunehmenden Problemen bei intensivem Einsatz von chemischen Pflanzenschutzmitteln in der konventionellen Landwirtschaft, gewinnt die mechanische Unkrautregulierung im Ackerbau zukünftig an Bedeutung. Der ganzflächige Einsatz von Geräten wie Striegel und Zinkenrotoren sowie der Teilflächeneinsatz zwischen den Kulturpflanzenreihen mittels Hacken, bedingen einen entsprechenden Entwicklungsstand der Feldkulturen. Ein sehr frühzeitiger Einsatz dieser Geräte zu Beginn der Wachstumsphase, in der die Effektivität in der Unkrautvernichtung am höchsten ist, ist mit einer hohen Verschüttungsgefahr für die Kulturpflanzen, aufgrund der Art des Werkzeugeingriffs in den Boden, verbunden und bedürfen bei Hacktechnik, die beim Einsatz an die Kulturpflanzenreihen gebunden ist daher Schutzeinrichtungen wie Scheiben und Bleche, die allerdings in Verbindung mit den Bearbeitungswerkzeugen einen hohen Platz- und Materialbedarf beanspruchen. Eine gesonderte Höhenführung zur Regulierung der Arbeitstiefe der Werkzeuge in Form von Stützrädern, Schleifkufen und Sensoren verstärken diesen Anspruch. In der Praxis findet daher ein ganzflächiger, reihenabhängiger Einsatz von Hackmaschinen in frühen Entwicklungsstadien der Kulturpflanzen mit Unkrautbekämpfungswirkung in der Reihe und im Reihenzwischenraum meist bei größeren Reihenabständen unter Verwendung von Schutzeinrichtungen statt. Dabei wird der Reihenzwischenraum mit klassischen Werkzeugen wie Messer oder Zinken oder Rollhacken bearbeitet. Direkt innerhalb der Pflanzenreihen kommen Zinkenrotoren und Fingerhacken zum Einsatz, die zur Regulierung der Arbeitstiefe einen speziellen technischen Aufwand erfordern. Bei weiterentwickelten Kulturpflanzen kann auf Schutzeinrichtungen verzichtet werden. Bei Reihenabständen zwischen ca. 10 und 18 cm, wie sie z.B. beim Getreideanbau üblich sind wird meist aus Platzgründen auf die Bekämpfung innerhalb der Reihe verzichtet und es bedarf einer höheren Entwicklungsstufe der Kulturpflanzen, um deren Verschüttung bei der Bearbeitung des Reihenzwischenraums zu vermeiden.

So ist aus der DE 10 008 146 A1 eine Fingerhacke bekannt, die sowohl im Reihenzwischenraum wie auch im Reihenraum unter Voraussetzung eines entsprechenden Reihenmindestabstandes und fortgeschrittenen Entwicklungsstadiums der Kulturpflanzen wirksam ist. Die Höhenführung zur Regulierung der Arbeitstiefe wird über gesonderte Stützräder und Schleifkufen ermöglicht, die in der DE 10 2015 016 884 B4 mit dem Einsatz von Sensortechnik ergänzt werden. Die Bearbeitung von Reihenabständen mit ca. 10 bis 18 cm kurz nach der Auflaufphase der Kulturpflanzen ist aus Platzgründen und zu erwartenden Verschüttungen der Kulturpflanzen nicht vertretbar. Ferner beschreibt die DE 100 08 146 A1 ein Hackgerät mit Federzinken und die DE 20 307 814 U1 eine Hackgerätekombination mit Zinkenführungsrad für die Unkrautbekämpfung innerhalb der Pflanzenreihe, die zwar bei kleinen Reihenabständen auch in Kombination mit Hackwerkzeugen für den Reihenzwischenraum einsetzbar sind, aber wegen fehlender Einrichtungen zur präzisen Arbeitstiefenregulierung, als Voraussetzung der ganzflächigen aber schonenden Bearbeitung der Bodenoberfläche, im Entwicklungsstadium der Kulturpflanzen kurz nach dem Auflaufen nicht verwendbar sind, da es ebenfalls zu starken Verschüttungen kommt. Im Stand der Technik sind außerdem die DE 17 89 060 U bekannt, welche mehrere frei drehbare angewinkelte Federzinkensterne aufweist sowie die EP 1 116 427 A1, in welcher eine Fingerhacke beschrieben ist.

Aufgabe der vorliegenden Erfindung ist es daher, die Nachteile des Standes der Technik zu überwinden und eine einfach konstruierte und wirksame Vorrichtung zur Unkrautbeseitigung zur Verfügung zu stellen die einen Einsatz bei Reihenabständen ab ca. 10 cm und im Entwicklungsstadium der Kulturpflanzen kurz nach dem Auflaufen wirkungsvoll und ökonomisch vertretbar ermöglicht.

Die Aufgabe wird durch eine Vorrichtung mit den Merkmalen des Hauptanspruchs gelöst. Vorteilhafte Weiterbildungen der erfindungsgemäßen Vorrichtung sind in den abhängigen Ansprüchen angegeben.

Gegenstand der vorliegenden Erfindung ist ein Zinkenführungsrad 18 zur Unkrautbeseitigung, umfassend ein Rad 2 und mindestens eine Vielzahl von Zinken 7, wobei die einzelnen Zinken 7 der Vielzahl von Zinken 7 entlang einer Umfangslinie auf dem Radkranz 16 des Rades 2 gleichmäßig zueinander beabstandet und radial nach außen weisend angeordnet sind.

Bevorzugt ist ein Zinkenführungsrad 18, wobei die Umfangslinie im Mittelbereich des Radkranzes 16 oder in einem Randbereich des Radkranzes 16 angeordnet ist.

Weiterhin bevorzugt ist ein Zinkenführungsrad 18, worin eine zweite Vielzahl von Zinken 7 entlang einer zweiten Umfangslinie auf dem Radkranz 16 angeordnet ist, wobei die Umfangslinien einen Abstand voneinander aufweisen, der mindestens halb so groß ist, wie die Breite des Radkranzes.

Besonders bevorzugt ist dabei, dass die Umfangslinien jeweils in einem der Randbereiche des Radkranzes 16 angeordnet sind.

Bevorzugt ist weiterhin, dass die Zinken 7 einer ersten Vielzahl von Zinken 7 jeweils eine Länge l1 aufweisen.

Besonders bevorzugt ist weiterhin, dass die Zinken 7 einer zweiten Vielzahl von Zinken 7 jeweils eine Länge l2 aufweisen, wobei die Längen l1 und l2 unterschiedlich sind.

Weiterhin bevorzugt ist ein Zinkenführungsrad 18, bei dem an einer Seitenfläche des Rades 2 ein Lauflager 4 vorgesehen ist, welches mit dem Rad 2 kraftschlüssig verbunden und in einer Halterung 3 drehbar gelagert ist.

Gegenstand der vorliegenden Erfindung ist auch eine Hack- oder Jätvorrichtung zur mechanischen Unkrautbeseitigung, umfassend mindestens ein erfindungsgemäßes Zinkenführungsrad 18.

Dabei ist besonders bevorzugt, dass für die jeweilige zu bearbeitende Pflanzreihe 6 zwei Zinkenführungsräder 18 derart angeordnet sind, dass der Abstand der Zinkenführungsräder 18 zueinander mindestens der Breite der Pflanzreihe 6 entspricht, also die Pflanzreihe 6 zwischen den Zinkenführungsrädern 18 liegt.

Bevorzugt ist dabei ferner, dass die Zinkenführungsräder 18 in Fahrtrichtung 8 auf die Pflanzreihe 6 zulaufend geneigt sind.

Besonders bevorzugt ist auch eine erfindungsgemäße Hack- oder Jätvorrichtung, welche weiterhin mindestens einen praxisüblichen Zinkenstern 11 und/oder mindestens einen Einzelfederzinken 12 umfasst, wobei der Einzelfederzinken 12 in Fahrtrichtung 8 vor und/oder hinter dem Zinkenführungsrad 18 angeordnet ist.

Ganz besonders bevorzugt ist eine erfindungsgemäße Hack- oder Jätvorrichtung, welche derart ausgebildet ist, dass mehrere Pflanzreihen 6 gleichzeitig bearbeitbar sind, indem mehrere Hack- oder Jätvorrichtungen miteinander gekoppelt sind und gemeinsam mittels einer einzelnen Antriebsvorrichtung über die Pflanzreihen 6 bewegt werden.

Der Grundgedanke dieser Erfindung, nämlich des erfindungsgemäßen Zinkenführungsrades, liegt in der technischen Kombination von einem oder zwei Zinkenrotoren und einem Führungsrad in einer Baueinheit, wobei die Zinken entlang von Umfangslinien auf dem Führungsrad nach außen weisend angeordnet sind. Das Führungsrad oder Laufrad begrenzt durch die Auflage seiner Oberfläche die Eindringtiefe der Zinken des Zinkenführungsrads in den Boden. Es wird damit eine kontinuierlich festgelegte Arbeitstiefe des Gerätes ermöglicht. Das Gerät läuft durch Rotation unmittelbar, im Abstand verstellbar, neben der Kulturpflanzenreihe. Durch einen Anstellwinkel von ca. 20 - 40 Grad zur Pflanzenreihe erfolgt die Erdbewegung durch die Arbeit der Zinken von der Reihe abgewandt. Das ermöglicht den Einsatz zur effektiven Unkrautregulierung in einem sehr frühen Entwicklungsstadium der Kulturpflanzen, ohne diese zu verschütten, bei Verzicht auf spezielle Einrichtungen wie Schutzscheiben oder -bleche. Bei höheren Kulturpflanzenbeständen kann durch Einstellen eines stumpfen Arbeitswinkels die Erdbewegung in entgegengesetzte Richtung, also zur Reihe hin, zwecks Anhäufelung erfolgen. Kleine Unkräuter, die sich zwischen den größeren Kulturpflanzen befinden, werden dann durch Verschüttung beseitigt.

Durch die erfindungsgemäße Gestaltung und Anordnung von Zinken und Laufrad auf einem erfindungsgemäßen Zinkenführungsrad mittels der Arbeitstiefenbegrenzung und der Lagerung einer gemeinsamen Achse, unter Berücksichtigung einer möglichen zusätzlichen Federspannung, die auf dem Gerät liegt, wird eine gleichmäßige Arbeitstiefe der Zinken gewährleistet. Die Aggressivität des Geräteeinsatzes wird über den Anstellwinkel und einstellbaren Federdruck auf das Gerät reguliert. Beim Einsatz von zwei Geräten jeweils links und rechts der Pflanzenreihe in Kombination mit einem zusätzlichen, vor- oder hintergelagertem, herkömmlichen Zinkenstern mit Zinkenlängen, die ein unbeschadetes Passieren der Kulturpflanzen erlauben und der direkt auf der Reihe arbeitet und dabei diese schonend durchkämmt, wird eine ganzflächige Bearbeitung des Bereichs zwischen und innerhalb der Reihe ermöglicht. Über eine verstellbare Verbindung zwischen den beiden erfindungsgemäßen Zinkenführungsraden und dem Zinkenstern bekannter Bauart ohne Führungsrad, kann die Arbeitstiefe des letzteren reguliert werden. Alternativ können auch alle drei Elemente einzeln und unabhängig voneinander über schwenkbare Hebelarme geführt werden. Die Tiefenregulierung des herkömmlichen Zinkensterns hat dann mit bekannten technischen Lösungen zu erfolgen. Durch Anordnen von einzelnen Federzinken, die vor oder hinter dem erfindungsgemäßen Zinkenführungsrad arbeiten, wird die Unkrautbekämpfungswirkung noch zusätzlich verstärkt. Bei fortgeschrittener Entwicklung der Kulturpflanzen können bei vorgelagerter Anordnung damit gleichzeitig größere Blätter in die Reihe gedrückt werden, damit sie nicht von den Zinkenrotoren beschädigt werden. Die Grundidee der Federzinkensterne ist u.a. aus der DE 100 08 146 A1 und der DE 203 07 814 U1 bekannt und in modifizierter Form zur praktischen Anwendung gekommen. Führungsräder zur Höhenregulierung sind ebenfalls bekannt und finden in der Hacktechnik schon seit langem Anwendung. Rad und Arbeitswerkzeug liegen dabei räumlich auseinander und sind aufgrund der Bodenunebenheit ständig auf unterschiedlichem Niveau. Gleichzeitig beanspruchen sie eine zusätzliche Konstruktion um den Zwischenabstand zu überbrücken. Durch die Kombination von Arbeitswerkzeug und Führungsrad auf engstem Raum in der hier beschriebenen Erfindung, werden diese Nachteile aufgehoben.

Ein weiterer Gegenstand der Erfindung ist die technische Kombination von drei Wirkmechanismen, bestehend aus Höhenführung zur Arbeitstiefenregulierung, der Hackwirkung zur totalen Pflanzenbekämpfung und der Striegelwirkung zur selektiven Pflanzenbekämpfung im Sinne der Unkrautvernichtung, in einem Werkzeug, dem erfindungsgemäßen Zinkenführungsrad. Der Werkzeugteil für die Höhenführung zur Arbeitstiefenregulierung ist selbst eine Hackeinrichtung zur totalen Bekämpfung aller Pflanzen im Reihenzwischenraum 13 in Form eines erfindungsgemäßen Zinkenführungsrades 18 und ist über eine, in der Länge verstellbare Achsenverlängerung 17 mit einem Zinkenstern 11 verbunden. Der Zinkenstern 11 übt eine selektive Wirkung zur Bekämpfung nur von Unkräutern im Reihenraum 14 aus, bei dem die Kulturpflanzen geschont werden. Bei der Einrichtung handelt es sich in der technischen Gesamtheit um einen Rotor oder ein Rad mit Zinken, wobei die Zinken auf dem Radkranz des Rotors bzw. des Rades angeordnet sind.

Die vorliegende Erfindung wird mit den beigefügten Zeichnungen näher erläutert. Es zeigt:
Figur 1 eine schematische Seitenansicht einer ersten Ausführungsform eines erfindungsgemäßen Zinkenführungsrads in Kombination mit anderen Elementen;
Figur 2 eine Draufsicht auf eine zweite Ausführungsform eines erfindungsgemäßen Zinkenführungsrads;
Figur 3 eine Draufsicht auf eine dritte Ausführungsform eines erfindungsgemäßen Zinkenführungsrads;
Figur 4 eine schematische Draufsicht auf eine erste Ausführungsform einer Anordnung eines erfindungsgemäßen Zinkenführungsrads in Kombination mit einem praxisüblichen Zinkenstern und anderen Funktionselementen; und
Figur 5 eine schematische Draufsicht auf eine zweite Ausführungsform einer Anordnung eines erfindungsgemäßen Zinkenführungsrads in Kombination mit einem praxisüblichen Zinkenstern und anderen Funktionselementen.

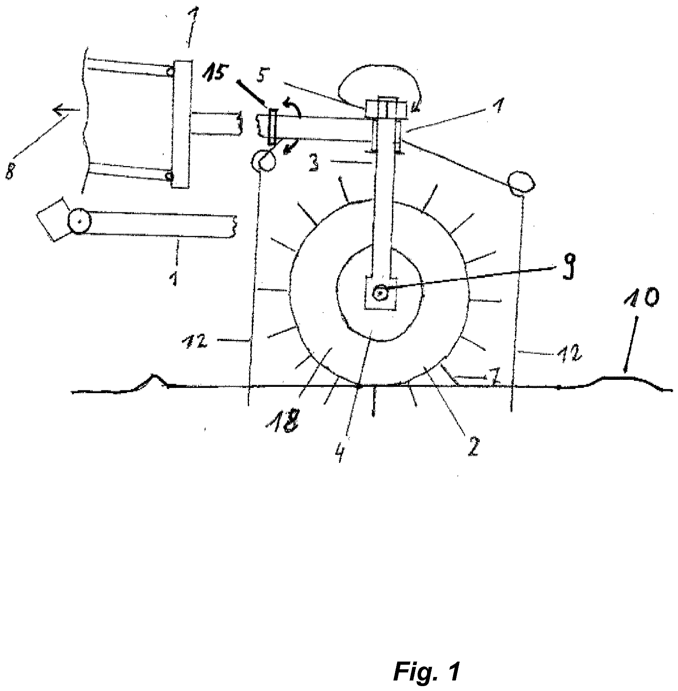

Die Figur 1 zeigt eine praxisübliche, parallelogramm- oder schwenkarmgeführte Werkzeughalterung 1, in welcher das Zinkenführungsrad 18, eine Rohrhalterung 3, die an dem Lauflager 4 des Zinkenführungsrads 18 angeschraubt ist, geführt ist. Die Rohrhalterung 3 ist zwecks Einstellung des Anstellwinkels des Zinkenführungsrads 18 zur Nutzpflanzenreihe 6, bzw. Fahrtrichtung 8, in der Halterung 1 drehbar angeordnet und mit der Befestigungsmutter 5 oder anderer technisch bekannten Lösungen zu arretieren, bzw. zu lösen.

Durch ebenfalls technisch bekannte Federmechanismen (nicht dargestellt) kann das Zinkenführungsrad 18 mit zusätzlichem Druck beauflagt werden. Die Auflagefläche des Radkranzes 16 des Zinkenführungsrads 18 begrenzt die Eindringtiefe der einzelnen Zinken 7 in den Boden. Durch Anordnung der Zinken 7 über den Umfang wird damit ein intensiver seitlicher Bodentransport erzielt, was zum Verschütten und gleichzeitigem Ausreißen der Unkräuter durch die Zinken 7 führt.

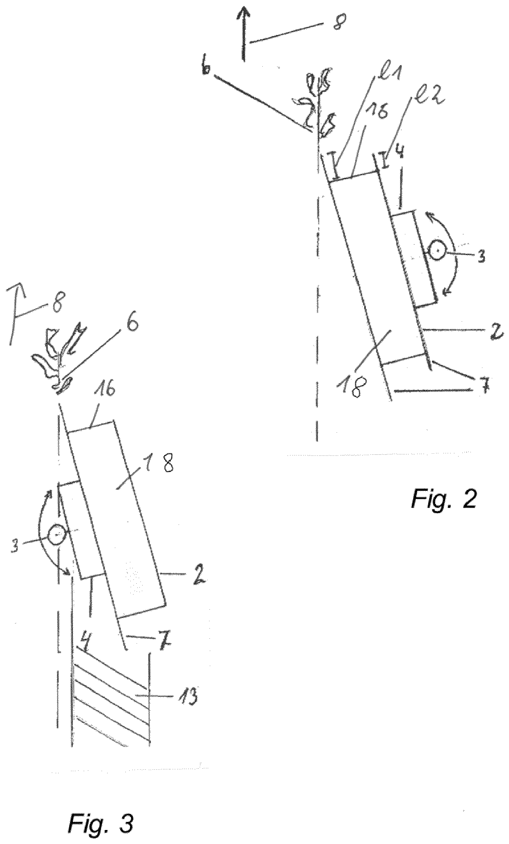

In der Figur 2 ist eine weitere Ausführungsform des erfindungsgemäßen Zinkenführungsrads 18 gezeigt. Das Laufrad 2 weist zwei Vielzahlen von Zinken 7 auf. Jeweils eine Vielzahl von Zinken 7 ist in einem Randbereich des Radkranzes 16 des Laufrades 2 angeordnet. Die Zinken 7 der einen Vielzahl von Zinken 7, welche im Randbereich des Radkranzes 16 angeordnet sind, welcher dem Lauflager 4 benachbart ist, weist eine Länge l2 auf, welche kürzer ist als die Länge l1 der Vielzahl von Zinken 7, die am anderen Randbereich des Radkranzes 16 angeordnet sind. Natürlich können die Längen l1 und l2 auch gleich groß sein (nicht dargestellt). Auch ist die umgekehrte Anordnung der Zinken 7 mit den Längen l1 und l2 möglich (nicht dargestellt). In diesem Fall sind die Zinken 7 im Randbereich des Radkranzes 16, welches dem Lauflager 4 benachbart ist, länger als die Zinken 7 in anderen Randbereich des Radkranzes 16.

Auch kann die Lage des Zinkenführungsrads 18 in Bezug auf die Pflanzreihe 6 bzw. die Fahrtrichtung 8 beliebig eingestellt sein. Dies kann beispielsweise mittels der Rohrhalterung 3 erfolgen, welche drehbar mit der Werkzeughalterung 1 verbunden ist. Auch ist die Lage der Rohrhalterung 3, welche am Lauflager 4 angelenkt ist, beliebig wählbar.

Auch kann das Lauflager 4 ein Bestandteil des Laufrades 2, also integraler Bestandteil des Zinkenführungsrads 18 sein. Dazu ist im Laufrad 2 eine Nabe vorgesehen, welche als Lauflager dient (nicht dargestellt). Dem Fachmann sind derartige Lösungen bekannt.

Schließlich zeigt die Figur 3 eine weitere Ausführungsform des erfindungsgemäßen Zinkenführungsrads 18. Das Laufrad 2 weist eine Vielzahl von Zinken 7 auf, wobei die Zinken an der dem Lauflager 4 benachbarten Seite des Laufrades 2 im äußeren Bereich des Radkranzes 16 angeordnet sind.

Es ist klar, dass die Zinken 7 der Vielzahl von Zinken 7 auch an der dem Lauflager 4 nicht benachbarten Seite des Laufrades 2 angeordnet sein können, wobei die Zinken 7 im äußeren oder im mittleren Bereich des Radkranzes 16 angeordnet sein können (nicht dargestellt).

Ähnlich wie in der Figur 2 dargestellt, kann auch in der in Figur 3 gezeigten Ausführungsform die Lage des Zinkenführungsrads 18 in Bezug auf die Pflanzreihe 6 bzw. die Fahrtrichtung 8 beliebig eingestellt sein. Dies kann beispielsweise mittels der Rohrhalterung 3 erfolgen, welche drehbar mit der Werkzeughalterung 1 verbunden ist. Auch ist die Lage der Rohrhalterung 3, welche am Lauflager 4 angelenkt ist, beliebig wählbar.

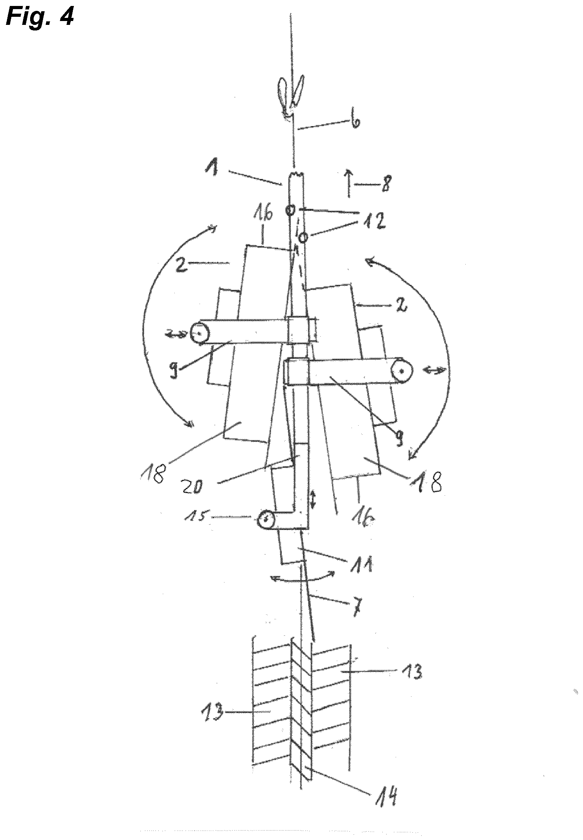

Die Figur 4 zeigt eine Anordnung zweier erfindungsgemäßer Zinkenführungsräder in Kombination mit einem praxisüblichen Zinkenstern und anderen Funktionselementen. Bei der Anordnung zweier Zinkenführungsräder 18 jeweils links und rechts der Pflanzenreihe 6 in einer gemeinsamem Gerätekonstruktion, wie dies in Figur 4 dargestellt ist, ist die Regulierung des Abstandes von der Pflanzenreihe 6 durch bekannte technische Lösungen, wie einem Abstandshalter 9 möglich. Hierbei kann über eine variable Verlängerung 20 der Werkzeughalterung 1 ein weiterer, praxisüblicher Zinkenstern 11 installiert werden, der direkt auf der Pflanzenreihe 6 arbeitet und ebenfalls in der Arbeitstiefe und im Anstellwinkel, mittels einer am Ende der Verlängerung 20 angeordneten Verschraubung 15, einstellbar ist. Die Zinkenführungsräder 18 bilden hier, aufgrund der Verbindung mit der Gerätekonstruktion, die Basis für die Tiefenführung. Eine Anordnung von zusätzlichen Einzelfederzinken 12, die den Zinkenführungsrädern 18 vor- und/oder nachgelagert sind, erhöht die Bekämpfungseffektivität. Es wird somit ein ganzflächiger Wirkungsbereich, bestehend aus Reihenraum 14 der Pflanzreihe 6 und Reihenzwischenraum 13 zwischen den zueinander benachbarten Pflanzreihen 6 geschaffen.

Ein weiterer Vorteil des erfindungsgemäßen Zinkenführungsrads 18 ist aber auch, dass dieses erfindungsgemäße Zinkenführungsrad 18 aus mehreren herkömmlichen Bauteilen zusammengesetzt werden kann. So ist es möglich, auf einer Seite eines herkömmlichen Laufrads einen herkömmlichen Zinkenstern zu befestigen. Dies würde dem erfindungsgemäßen Zinkenführungsrad 18 gemäß der Figur 3 entsprechen. Zusätzlich kann an der anderen Seite des herkömmlichen Laufrads ein weiterer herkömmlicher Zinkenstern befestigt sein, sodass dann zwei Vielzahlen von Zinken 7 am Laufrad 2 angebracht sind. Dies entspricht dann dem erfindungsgemäßen Zinkenführungsrad 18 gemäß der Figur 2. Das erfindungsgemäße Zinkenführungsrad 18 ist dann in einfacher Weise aus herkömmlichen Bauteilen kostengünstig herstellbar.

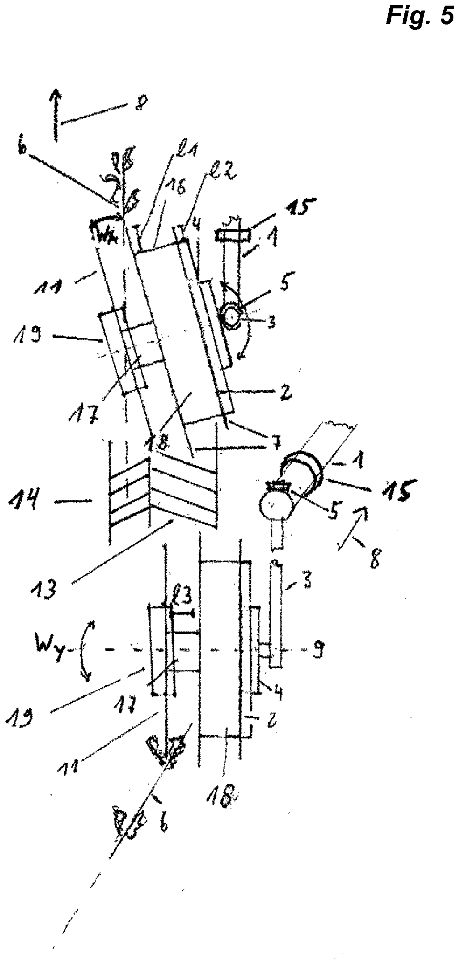

Beansprucht wird ferner eine Weiterentwicklung einer Jätvorrichtung, wie diese in der Figur 5 dargestellt ist.

Das erfindungsgemäße Zinkenführungsrad 18 mit einer Vielzahl von Zinken 7 kann mit einem praxisüblichen Zinkenstern 11 über eine Achse verbunden werden, wobei sich die beiden Rotoren in Parallelstellung befinden. Die Achsenlänge l3 ist mittels bekannter technischer Einrichtungen veränderbar. Der Durchmesser des Zinkensterns 11 liegt abweichend oder im gleichen Wertebereich des Durchmessers vom Zinkenführungsrad 18. Der Arbeitsbereich des Zinkensterns 11 kann innerhalb oder außerhalb der Pflanzenreihe 6 liegen. Durch die Anbringung bekannter technischer Lösungen am Werkzeughalter 1 kann die Winkelstellung der Achse 17 gegenüber der Bodenoberfläche verändert werden, um eine Feinregulierung der Arbeitstiefe des Zinkensterns 11 zu bewirken.

Das Führungsrad 2 begrenzt während des Arbeitsprozesses durch die ständige Auflage seiner Oberfläche auf die Bodenoberfläche 10 die Eindringtiefe der Zinken 7 des Zinkenführungsrads 18 in den Boden. Da die Zinken 7 völlig in den Boden eindringen, gibt es im Gegensatz zu bekannten Zinkenrotoren und Fingerhacken keinen Raum für den unbeschädigten Durchgang von Pflanzen. Die Wirkung kommt aufgrund der Vernichtung aller Pflanzen (einschließlich von Kulturpflanzen, die unbeabsichtigt im Reihenzwischenraum wachsen) der einer Hacke gleich. Die Zinkenlängen entsprechen im Wert der damit festgelegten Arbeitstiefe, die zusätzlich durch Auflage eines Federdrucks kontinuierlich gehalten wird. Das Geräteteil läuft durch Rotation unmittelbar, im Abstand zur Kulturpflanzenreihe 6 verstellbar, im Reihenzwischenraum 13, neben der Kulturpflanzenreihe 6.

Durch einen einstellbaren Anstellwinkel Wx, der optimal zwischen ca. 20 bis 40 Grad zur Pflanzenreihe 6 liegt, erfolgt die Erdbewegung durch die Arbeit der Zinken 7 von der Reihe 6 abgewandt. Dabei werden die Pflanzen im Wirkungsbereich verschüttet und herausgerissen. Das ermöglicht den Einsatz zur effektiven Unkrautbekämpfung in einem sehr frühen Entwicklungsstadium der Kulturpflanzen, ohne diese zu verschütten, bei Verzicht auf spezielle Einrichtungen wie Schutzscheiben oder -bleche. Bei höheren Kulturpflanzenbeständen kann durch Schwenken des Gerätes um die Rohrhalterung 3 die Erdbewegung in entgegengesetzter Richtung, also zur Pflanzenreihe 6 hin, zwecks Anhäufelung erfolgen. Kleine Unkräuter, die sich dann zwischen größeren Kulturpflanzen befinden werden dabei durch Verschüttung beseitigt.

Das Zinkenführungsrad 18 ist auf der, dem Lauflager 4 abgewandten Seite über eine, in der Länge verstellbare Achse 17 mit einem Zinkenstern 11 fest verbunden. Der Zinkenstern 11 hat aufgrund der Verbindung zum Zinkenführungsrad 18 keine eigene Lagerung wie es bei bekannten Zinkenrotoren und Fingerhacken üblich ist. Der Zinkenstern 11 hat die Funktion eine selektive Striegelwirkung durch ein schonendes Durchkämmen des Bodens einschließlich der Kulturpflanzen im Reihenraum 14 zu erzielen. Dazu sind auf der Radnabe 19 eine Vielzahl von Zinken 7 entlang einer, zweier oder mehrerer Umfangslinien gleichmäßig zueinander beabstandet und radial nach außen weisend angeordnet. Durch das Durchkämmen des Reihenraumes 14 im entsprechenden Anstellwinkel, wie er auch beim Zinkenführungsrad vorliegt, werden im Aufkeimen befindliche Unkräuter vernichtet, wogegen die bereits aufgelaufenen Kulturpflanzen unbeschadet stehen bleiben. Zinkenführungsrad 18 und Zinkenstern 11 rotieren parallel mit gleicher Drehzahl. Die Länge der Achse kann so eingestellt werden, dass der Zinkenstern 11 unmittelbar im Reihenraum 14 läuft. Der Durchmesser der Achsenverlängerung 17 und der Radnabe 19 des Zinkenstern 11, ist so gewählt, dass eine lichte Höhe entsteht, die ein unbeschädigtes Passieren der Kulturpflanzen darunter bei Durchkämmen des Bodens und der Kulturpflanzen selbst, mittels der Zinken 7 des Zinkensterns 11, ermöglicht.

Im Gegensatz zu bekannten Zinkenrotoren und Fingerhacken, die entweder nur den Anstellwinkel zur Fahrtrichtung oder nur den Achsenwinkel zur horizontalen Bodenoberfläche 10 verstellen können, sind bei der Erfindung beide Möglichkeiten gegeben.

Die Radachse 9 mit der angeschraubten Achsenverlängerung 17 ist im Winkel Wy über dem Boden mittels der Betätigung der Verschraubung 15 an der Werkzeughalterung 1 verstell- und arretierbar. Der Anstellwinkel Wx zur Fahrtrichtung 8, bzw. zur Kulturpflanzenreihe 6 wird über das Drehen der Rohrhalterung 3 verändert. Dazu wird die Befestigungsmutter 5 gelöst und nach Winkeleinstellung wieder festgezogen. Die Erhöhung des Anstellwinkels Wx gegenüber der Fahrtrichtung 8 bewirkt eine aggressivere Unkrautbekämpfung beim Zinkenführungsrad 18 und beim Zinkenstern 11 gleichzeitig, ohne die Arbeitstiefe zu verändern. Die Grundstellung der Achse 9 und der Achsenverlängerung 17 ist die Waagerechte. Durch Veränderung des Achsenwinkels Wy über dem Boden mittels der Verschraubung 15 kann ein Absenken bzw. Heben des Achsenendes am Zinkenstern 11 ermöglicht werden. Dadurch dringen die Zinken 7 des Zinkensterns 11 beim Absenken tiefer in den Boden ein und erlangen bei der Erdbewegung in Richtung Zinkenführungsrad 18 eine zusätzliche Aggressivität, die durch die Schrägstellung der Zinken 7 gegenüber der Senkrechten noch verstärkt wird. Das Zinkenführungsrad 18 behält dabei seine Arbeitstiefe, erhöht aber die Aggressivität der Zinken 7 ebenfalls durch die Schrägstellung.

Im Falle eines Anhebens des Achsenendes tritt der entgegengesetzte Effekt ein. Die Aggressivität beider Werkzeuge wird verringert, die Arbeitstiefe des Zinkensterns 11 ebenso, wobei die Arbeitstiefe des Zinkenführungsrades 18 wieder gleich bleibt.

Durch die umfassenden Einstellmöglichkeiten kann entsprechend auf das Entwicklungsstadium von Kulturpflanzen und Unkräutern im Sinne einer hohen Wirksamkeit reagiert werden. Die gesamte Vorrichtung ist mit einer Werkzeughalterung 1 verbunden. Es können mehrere Vorrichtungen nebeneinander oder nacheinander auch beidseitig der Kulturpflanzenreihe unter Beachtung der Kulturreihenzahl und des Reihenabstandes arbeiten. Einzelfederzinken 12 können zum Schutz und zur Abweisung größerer Kulturpflanzenblätter und zusätzlicher Erdbewegung vor oder hinter dem Zinkenführungsrad 18 angeordnet werden.

Die vorliegende Erfindung weist gegenüber den im Stand der Technik bekannten Vorrichtungen die folgenden Vorteile auf.

Die Kombination von Hackwerkzeug (in Form des einfindungsgemäßen Zinkenführungsrads 18 mit totaler Bekämpfungswirkung), Striegel (in Form des Zinkensterns 11 mit selektiver Bekämpfungswirkung) und der Höhenführung (in Form des Laufrads 2, das Bestandteil des Zinkenführungsrads 18 ist und somit die Höhenführung selbst zum Hackwerkzeug macht), in einem rotierenden Werkzeug ist in dieser Kombination nicht bekannt.

Im Stand der Technik ist diese Kombination von drei Wirkungsmechanismen in einem Werkzeug nicht bekannt. Im Stand der Technik werden die Höhenführung zur Arbeitstiefenregulierung durch spezielle Einrichtungen wie Laufräder, Gleitkufen und Sensoren gewährleistet. Werkzeuge mit Totalwirkung z.B. Hackmesser wie auch Werkzeuge mit selektiver Wirkung z.B. Zinkenrotoren und Fingerhacken laufen separat bzw. es besteht eine, die Genauigkeit der Tiefenführung negativ beeinflussende, weite Distanz zwischen Höhenführungseinrichtung und Arbeitswerkzeug.

Ein weiterer Vorteil der vorliegenden Erfindung ist, dass der Werkzeugteil des Zinkenstern 11 keine eigene Lagerung besitzt wie bekannte Zinkenrotoren und Fingerhacken und ist zur Funktionsausübung über eine in der Länge verstellbare Achse mit dem Werkzeugteil Zinkenführungsrad 18 verbunden.

Vorteilhaft ist ferner, dass das Werkzeugteil in Form des Zinkenführungsrades 18 einen grundsätzlich anderen Aufbau und andere Wirkungsweise hat als bekannte Zinkenrotoren und Fingerhacken. Gemäß der Erfindung dringen die Zinken 7 mit ihrer gesamten Länge in den Boden ein und vernichten alle Pflanzen im frühen Entwicklungsstadium durch Ausreißen und Verschütten. Dazu ist das ständige Aufliegen des Laufrads 2 auf der Bodenoberfläche Voraussetzung, um der Pflanze keinen Raum für den unbeschädigten Durchgang durch die Zinken 7 zu geben. Gleichzeitig begrenzt es die Eindringtiefe der Zinken. Bei bekannten Zinkenrotoren und Fingerhacken ist eine selektive Pflanzenbekämpfung beabsichtigt (Kulturpflanzen bleiben stehen und kleinere Unkräuter werden vernichtet). Ein unbeschädigter Durchgang der Kulturpflanzen wird bei den bekannten Zinkenrotoren durch die Beibehaltung einer lichten Höhe zwischen der Nabe des Zinkenrotors und der Bodenoberfläche ermöglicht. Bei der Fingerhacke erfolgt ein seitlicher Eingriff in die Kulturreihen. Aufgrund des vorhandenen Raumes zwischen den Fingern können die größeren Pflanzen die Bearbeitung größtenteils überstehen.

Gemäß der vorliegenden Erfindung des Zinkenführungsrades 18 ist der Anstellwinkel Wx zur Pflanzenreihe 6 aber auch der Winkel Wy der Radachse 9 bzw. der verstellbaren Achsenverlängerung 17 zur horizontalen Bodenoberfläche 10 zur Erlangung einer optimalen Arbeitswirkung variierbar. Durch die jeweiligen Winkelveränderungen verändern sich gleichzeitig die Intensität der Totalwirkung im Reihenzwischenraum 13 und die selektive Wirkung im Reihenraum 14. Bei bekannten Zinkenrotoren und Fingerhacken ist jeweils nur einer dieser Winkel veränderbar. Die Arbeitswerkzeuge mit Totalwirkung müssen dort, falls vorhanden, zudem separat in ihrer Intensität reguliert werden.

### Bezugszeichenliste

- 1: Werkzeughalterung
- 2: Rad / Laufrad
- 3: Halterung / Rohrhalterung
- 4: Lauflager
- 5: Befestigungsmutter
- 6: Pflanzenreihe
- 7: Zinken
- 8: Fahrtrichtung
- 9: Radachse / Abstandsregulierer
- 10: Bodenoberfläche
- 11: Zinkenstern
- 12: Einzelfederzinken
- 13: Reihenzwischenraum
- 14: Reihenraum
- 15: Verschraubung
- 16: Radkranz
- 17: Achse, in der Länge verstellbar
- 18: Zinkenführungsrad
- 19: Radnabe des Zinkensterns
- 20: variable Werkzeugverlängerung

## Patentansprüche

1. Zinkenführungsrad (18) zur Unkrautbeseitigung, umfassend ein Rad (2) und mindestens eine Vielzahl von Zinken (7), wobei die einzelnen Zinken (7) der Vielzahl von Zinken (7) entlang einer Umfangslinie auf dem Radkranz (16) des Rades (2) im Wesentlichen gleichmäßig zueinander beabstandet und im Wesentlichen radial nach außen weisend angeordnet sind.

2. Zinkenführungsrad (18), gemäß Anspruch 1, **dadurch gekennzeichnet, dass** der Radkranz (16) des Rades (2) derart ausgebildet ist, dass das Rad (2) während des Arbeitsprozesses nahezu vollständig auf der Bodenoberfläche (10) aufliegt und die Eindringtiefe der Zinken (7) in den Boden begrenzt.

3. Zinkenführungsrad (18), gemäß Anspruch 1, **dadurch gekennzeichnet, dass** die Umfangslinie im Mittelbereich des Radkranzes (16) oder in einem Randbereich des Radkranzes (16) angeordnet ist.

4. Zinkenführungsrad (18), gemäß Anspruch 1, **dadurch gekennzeichnet, dass** eine zweite Vielzahl von Zinken (7) entlang einer zweiten Umfangslinie auf dem Radkranz (16) angeordnet ist, wobei die Umfangslinien einen Abstand voneinander aufweisen, der mindestens halb so groß ist, wie die Breite des Radkranzes.

5. Zinkenführungsrad (18), gemäß Anspruch 4, **dadurch gekennzeichnet, dass** die Umfangslinien jeweils in einem der Randbereiche des Radkranzes (16) angeordnet sind.

6. Zinkenführungsrad (18), gemäß einem der voranstehenden Ansprüche, **dadurch gekennzeichnet, dass** die Zinken (7) einer ersten Vielzahl von Zinken (7) jeweils eine Länge l1 aufweisen.

7. Zinkenführungsrad (18), gemäß mindestens einem der Ansprüche 4 bis 6, **dadurch gekennzeichnet, dass** die Zinken (7) einer zweiten Vielzahl von Zinken (7) jeweils eine Länge l2 aufweisen, wobei die Längen l1 und l2 unterschiedlich sind.

8. Zinkenführungsrad (18), gemäß mindestens einem der voranstehenden Ansprüche, **dadurch gekennzeichnet, dass** an einer Seitenfläche des Rades (2) ein Lauflager (4) vorgesehen ist, welches mit dem Rad (2) kraftschlüssig verbunden und in einer Halterung (3) drehbar gelagert ist.

9. Hack- oder Jätvorrichtung zur mechanischen Unkrautbeseitigung, umfassend mindestens ein Zinkenführungsrad (18) gemäß einem der voranstehenden Ansprüche.

10. Hack- oder Jätvorrichtung, gemäß Anspruch 9, **dadurch gekennzeichnet, dass** für die jeweilige zu bearbeitende Pflanzreihe (6) zwei Zinkenführungsräder (18) derart angeordnet sind, dass der Abstand der Zinkenführungsraden (18) zueinander mindestens der Breite der Pflanzreihe (6) entspricht.

11. Hack- oder Jätvorrichtung, gemäß Anspruch 10, **dadurch gekennzeichnet, dass** die Zinkenführungsräder (18) in Fahrtrichtung (8) auf die Pflanzreihe (6) zulaufend geneigt sind.

12. Hack- oder Jätvorrichtung, gemäß mindestens einem der Ansprüche 9 bis 11, weiterhin umfassend mindestens ein praxisübliches Zinkenführungsrad (11) und/oder mindestens einen Einzelfederzinken (12), wobei der Einzelfederzinken (12) in Fahrtrichtung (8) vor und/oder hinter dem Zinkenführungsrad (18) angeordnet ist.

13. Hack- oder Jätvorrichtung, gemäß mindestens einem der Ansprüche 9 bis 12, derart ausgebildet, dass mehrere Pflanzreihen (6) gleichzeitig bearbeitbar sind, indem mehrere Hack- oder Jätvorrichtungen miteinander gekoppelt sind und gemeinsam mittels einer einzelnen Antriebsvorrichtung über die Pflanzreihen (6) bewegt werden.
